# EUROPEAN PATENT SPECIFICATION

(11) **EP 4 097 951 B1**
(45) Date of publication and mention of the grant of the patent: **30.07.2025**
(21) Application number: 20724062.3
(22) Date of filing: 04.05.2020
(51) Int. Cl.: H04L 67/306

(54) **METHOD AND DEVICE FOR SERVICE COMPOSITION**
VERFAHREN UND VORRICHTUNG ZUR DIENSTZUSAMMENSETZUNG
PROCÉDÉ ET DISPOSITIF POUR LA COMPOSITION DE SERVICES

(43) Date of publication of application: 07.12.2022
(73) Proprietor: Huawei Technologies Co., Ltd., Shenzhen, Guangdong 518129 (CN)
(72) Inventor: HECKER, Artur, 80992 Munich (DE); DESPOTOVIC, Zoran, 80992 Munich (DE); XIAO, Xun, 80992 Munich (DE)
(74) Representative: Roth, Sebastian
(86) International application number: PCT/EP2020/062275
(87) International publication number: WO 2021/223835

(56) References cited:
- US-A1- 2016 182 658
- US-A1- 2018 004 580

## Description

### TECHNICAL FIELD

The present disclosure relates to mobile communication networks, and more particularly to the service composition among a group of devices. The disclosure proposes a user centric solution for composing a synthesized service in wireless network wherein it allows users to define and control the services.

### BACKGROUND

Today a user normally has multiple personal digital devices. For example, a user at least has a smart phone, one or multiple wearables (e.g. smart watch, fitness armbands and wireless earphones), one or multiple home appliances such as air-conditioner, lighting system, security web-cameras and so on. In addition to digital products, a user also has many applications (Apps) installed on devices, wherein some of Apps are paid subscription services.

A clear trend is that those devices are equipped with networking capability, in which wireless fidelity (WiFi) and Bluetooth interfaces are common. In the near future, interfaces to cellular networks will also be common on devices. For example, many smart watches on the market already are equipped with cellular functionality such as Apple Watch. Future mobile networks are expected to provide pervasive wireless coverage and high throughput/low latency connections for Internet-of-things (IoT). It is predicted that there will be 50 billion of IoT devices connected to the network by 2025.

Service providers play different roles to provide various services to connected devices. For example, a mobile operator provides mobile communication services to mobile users (e.g. wireless coverage with network connectivity); vendors provide backend services for product maintenance and added value services; over the tops (OTTs) build applications (Apps) to enrich, diversify and amplify the utilizations of devices.

On the one hand, this shows a centralized control paradigm by the service providers. In specific, service catalogs are totally defined by a service provider; the feature on a device has to be provided by its vendor; and a specific functionality of an App has to be enabled by the OTT.

On the other hand, as an owner of devices and Apps, there is a very limited space where the services or features can be customized. It is even impossible for a user to associate two devices to temporally form a logically new device, especially when they are products of different vendors. In general, the current service paradigm can be seen as a provider-centric paradigm.

A provider-centric paradigm shows the following limitations: 1) a user will have to manage different accounts for different services; 2) seamless interoperability between devices of different vendors would be difficult. For example, a user has to manually pair a loudspeaker with a mobile phone via Bluetooth, which is usually cumbersome; 3) a user loses control over data once the data is transmitted to the server side. For example, personal data (e.g. photos, traces, browsing history), profiles and usage statistics are reportedly abused by some service providers (e.g. the privacy branch scandal of Facebook); and 4) a user cannot customize, combine, and/or compose with available services of its own.

However, there are many scenarios where a user needs more flexibility and self-control over the services. The reason is that application scenarios cannot be pre-defined anymore. For instance, a user may want to dynamically decide if a HiFi loudspeaker should connect to its TV or its mobile phone; a user may also want to project a video through a projector nearby; a user may want to copy some files from a MacBook to a Windows PC without using a third party App; a user may even want to share private data (e.g. photos) in an encrypted way but combine to use multiple cloud storage providers (e.g. split between Google Cloud and Dropbox). All these scenarios will become increasingly popular with personalization. But there is no solution for providing self-control of service or device composition currently.

US 2016/182658 A1 relates to creating and updating a user profile related to multiple devices, and synchronizing applications' sessions for the user on different devices.

### SUMMARY

In view of the above-mentioned limitations, embodiments of the present invention aim to introduce a solution for composing a synthesized service in wireless network. In particular, an objective is to provide new types of services that may be customized by one or more user's devices. A general goal aims to allow a user to have fully control on how its devices,

Apps and subscriptions therein should work cooperatively.

In particular, it is desired to provide a solution for managing resources to form a temporally collaborative group with a set of devices, Apps and/or subscriptions, so that a logically new device may be created by the wish of the user.

The objective is achieved by embodiments as provided in the enclosed independent claims.

Advantageous implementations of the embodiments are further defined in the dependent claims.

### BRIEF DESCRIPTION OF DRAWINGS

The above described aspects and implementation forms of the embodiments of the present invention will be explained in the following description of specific embodiments in relation to the enclosed drawings, in which
- FIG. 1: shows a method according to an embodiment of the invention.
- FIG. 2: shows a general SC architecture according to an embodiment of the invention.
- FIG. 3: shows a general SC architecture within carrier networks according to an embodiment of the invention.
- FIG. 4: shows a general SC architecture within OTT service providers according to an embodiment of the invention.
- FIG. 5: shows a general SC architecture within a personal device according to an embodiment of the invention.
- FIG. 6: shows a SC procedure in a 3GPP Network according to an embodiment of the invention.
- FIG. 7: shows a SC procedure in clouds according to an embodiment of the invention.
- FIG. 8: shows a SC procedure in a hub device according to an embodiment of the invention.
- FIG. 9: shows a method according to an embodiment of the invention.
- FIG. 10: shows a network entity according to an embodiment of the invention.
- FIG. 11: shows an entity on a device according to an embodiment of the invention.

### DETAILED DESCRIPTION OF EMBODIMENTS

Illustrative embodiments of method, device, and program product for efficient packet transmission in a communication system are described with reference to the figures. Although this description provides a detailed example of possible implementations, it should be noted that the details are intended to be exemplary and in no way limit the scope of the application.

Moreover, an embodiment/example may refer to other embodiments/examples. For example, any description including but not limited to terminology, element, process, explanation and/or technical advantage mentioned in one embodiment/example is applicative to the other embodiments/examples.

The previously described scenarios, in which a user needs more flexibility and self-control over the services, are considered as a "user-centric" paradigm. Note that a user here is not just limited to a natural person who owns one or several devices or Apps. A user eventually represented or delegated by a device generalizes as a logical entity which would like to form temporal collaborations, which is planned, controlled and operated by the device. The device may under control of the user who owns some resources e.g. devices, equipment and software. In specific, through a device, a user will have to be able to define synthesized services based on existing resources e.g. devices, Apps and subscriptions.

In general, existing solutions provide very limited space for service composition, although they target to enrich their services, e.g. enabling more features on their devices and/or apps. We classify them in the categories as follows.

The first class of existing solutions is called closed ecosystem. Within the ecosystem, the vendor develops various features for its products. Many of them enable cross-device collaborations and improve productivity.

For example, with Apple's Macbook and iPhone/iPad, the so-called universal clipboard service allows a user to copy at one device and seamlessly paste on another device; another example is Huawei's Multi-screen Collaborations such as phone-to-laptop and laptop-to-phone synchronization; Huawei's Vision TV, which integrates IoT control, information-sharing center, smartphone mirroring and so on; This in general aims to provide a method for information sharing among multiple devices either through a communication network or a local hub device. In addition, Samsung provides its SmartThings Hub^{®} that supports adding IoT devices to the hub, and managing them through an App. Every vendor on the market tries to build an ecosystem with its own products.

Usually, every vendor tries to specialize its own products in order to distinguish products of its opponents. This aims to compete the market share.

The second class of existing solutions is called third party App. Many third party Apps are developed in order to overcome the barrier between the devices from different vendors. A third party App acts as an intermediate gateway where the information flow can be bridged between two different ecosystems. Examples include many existing cloud storage services (e.g. Google Drive, Dropbox, Microsoft Azure and so on), 1Clipboard based on Google Drive realizes the same functionality as Apple's Universal Clipboard, 1Password as a password manager delegating the authentication to different OTTs. In a different way, software companies are also trying to build their own ecosystem that dominates the usage on devices.

The third class of existing solutions is from mobile network operators. Recently, operators start to play a more important role not only at traditional mobile services (e.g. calling and internet surfing with a data plan, but also at other service enabling such as proximity services (ProSe). A ProSe function gives a possibility that neighboring devices may communicate directly with each other without going through the infrastructure. An operator acts as a moderator for service discovery and radio resource scheduling, and coordinated devices, no matter if they are from the same vendor, manufacturers or software companies. For example, in V2X communication, cooperative awareness message (CAM) and Decentralized Environmental Notification Message (DENM) are typical scenarios where ProSe function helps.

However, the main disadvantages of existing solutions are summarized as follows.

Firstly, a boundary exists between vendors, software developers (companies) and operators. This boundary blocks many possible collaborations across products, Apps and subscribers. For instance, a Samsung smartphone cannot copy-paste to an Apple's Macbook, unless an App does this job. Sometimes, such a boundary is deliberately maintained in order to prevent competitors.

Secondly, neither a closed ecosystem nor an App can cover all use cases, which is an endless wish list. Requirements from users are diverse and unpredictable. A service provider focuses more on those popular use cases. Though the ProSe function provided by operators is neutral to the brands, it is only for service discovery between proximity subscribers. Thus, ProSe function does not really enable service composition.

The most critical disadvantage is that services provided with existing solutions are still under the control of respective service providers. What kinds of services and/or how the services that can be used are fully defined by the providers. With considering the first two deficiencies above, a user has limited space to customize with its existing resource to compose individually new services for itself.

In general, there is a missing part to realize a user-centric service paradigm, where a user yields an opportunity to compose self-defined services based on its available resources.

Firstly, the terms that will be used in this disclosure are defined as following:
- Device: Device in this disclosure may be a combination of any of the original digital device equipment, Apps and subscription that may belong to an owner. For example, a device may be hardware equipment that has chipsets onboard for one/some/all of purposes on computing, storage and networking; or it may be a hardware component that realizes certain actuations interacting with the physical world (such as cameras, sensors, GPS and so on); or especially it may be a software element (e.g. App) that is realized in a form of computer program running on a dedicated hardware equipment (such as server machine, smart phone, tablet); or it may be a combination of any previous possibilities.
- Subscription: A paid service with access permission (such as membership of video streaming, music, additional cloud resource and so on). A subscription usually binds with a credential that is held by its subscriber. A subscription may be associated with a device.
- User: A user may be a natural person or an organization who is the owner or authorized to manage a set of devices. User and owner may be interchangeably used in this disclosure.
- Service composition (SC): A set of devices (may or may not associate with subscriptions) collaborate in a specified way and form a new logical device that provides synthesized services expected by a user.

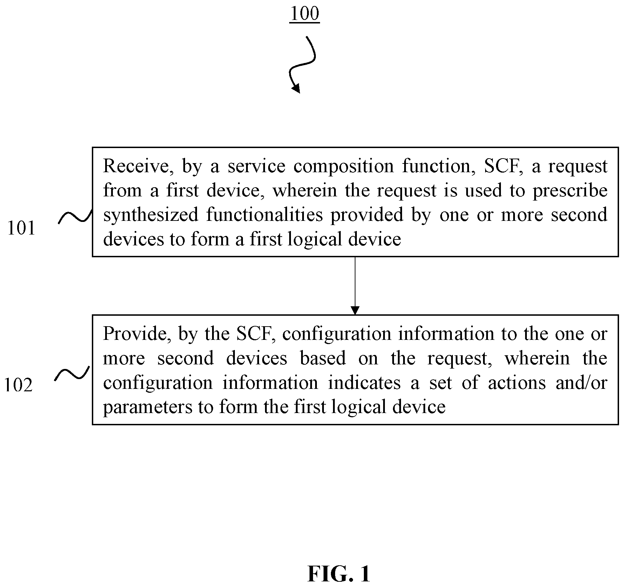

FIG. 1 shows a method 100 according to an embodiment of the invention, particularly for composing a service in wireless network. In a particular embodiment of the invention, the method 100 is performed by an SCF 200. The method 100 comprises: a step 101 of receiving, by the SCF 200, a request from a first device 210, wherein the request is used to prescribe synthesized functionalities provided by one or more second devices 220 to form a first logical device; and a step 102 of providing, by the SCF 200, configuration information to the one or more second devices 220 based on the request, wherein the configuration information indicates a set of actions and/or parameters to form the first logical device.

In order to realize an SC, first of all, a user should have a unified way to manage devices, which have been authorized for management. According to embodiments of this invention, the first device may be a device accessed by the user, and the second devices may be the devices, which have been authorized for management, including the devices that may belong to the device owner or may belong to another device owner. In addition, a user may able to plan an SC through the first device. The SC describes how functionalities of a first logical device shall be synthesized. According to embodiments of the invention, the first device sends the request to the SCF, to prescribe the synthesized functionalities provided by one or more second devices. Moreover, a composed service may be deployed and controlled in run time in order to guarantee a service quality and align with any incurred policy.

The technical problem(s) that have to be solved may as follows: 1) how to create and maintain a profile list of all available devices in a unified way; 2) how to formulate an SC based on the maintained device profile, for example, the connectivity pattern, an execution logic and service policy for a set of devices; and 3) how a formulated SC can be deployed onto the respective device.

Embodiments of this invention propose a user-controlled function acting as a service hub for the devices, called service-composition network function (SC-NF) or simply service composition function (SCF).

SC-NF or SCF serves the following main purposes:
*Resource Management*: where profiles of devices with or without subscriptions can be created, updated and removed at the SCF in order to form a unified view. The managed information includes:
   - Profiles of devices/subscriptions: specifications of the devices (e.g. capacity, type, feasible interfaces, functions and so on);
   - Credentials: accounts (e.g. user names and passwords) of devices or subscriptions (e.g. Apps running on the devices);
*Formulating SC*, where a composition scheme and policy requested from a device with available devices will be sent to SCF. After receiving the request, SCF generates a workflow configuration for all involved devices and/or itself. The configuration specifies parameters for interaction protocols, interfaces.
*SC Deployment*, where SCF instructs every involved device with the generated workflow configuration so that the composed service is activated. During the run time, SCF may receive run-time data from the devices for monitoring and service quality control.

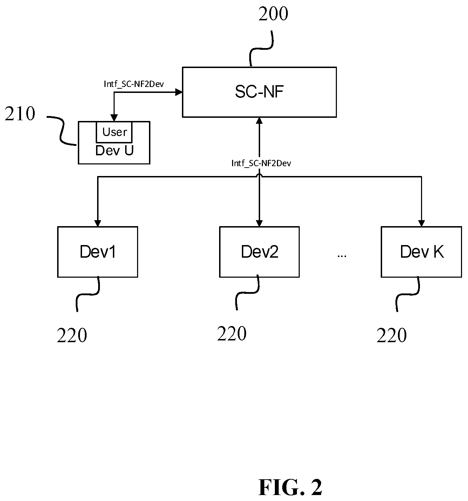

A general architecture with the proposed SCF / SC-NF 200, according to an embodiment of the invention, is depicted in FIG. 2.

A device Dev U 210 which has the authority to manage the devices 220 (i.e. Dev1, Dev2 to Dev K and Dev U), is shown in FIG. 2. The devices 220 may be controlled by the owner of the device U. The devices 220 may be owned by the user of device Dev U 210 or by other users. A user may use the Dev U 210 to interact with SC-NF 200 where such devices may or may not participate an SC. The general procedure for an SC is described as follows.

Firstly, a device may be registered to SC-NF 200, wherein a profile list will be created at SC-NF 200 and specifications, configurations, profiles and credentials are maintained there.

Secondly, an SC request is sent to SC-NF 200 from the Dev U 210. In the request, a set of devices are specified and how involved devices should collaborate to each other is prescribed. These tasks will be done with signaling between the SC-NF 200 and the Dev U 210 over an interface, for instance, named as Intf_SC-NF2Dev.

Thirdly, the SC request will be processed by the SC-NF 200. After that, SC-NF 200 will decompose the SC into detailed configurations for every device 220 with logical relationships, interface parameters, collaboration policies and so on.

The detailed configurations may be deployed onto each device 220 to realize the SC. After the deployment, SC-NF 200 monitors the execution status and coordinate the involved resource to fulfill service requirements if applicable. These tasks may be done with the signaling between the SC-NF 200 and every device 220 over an interface, e.g. the Intf_SC-NF2Dev.

The SC-NF 200 has multiple embodiment options, which are briefly discussed as follows.

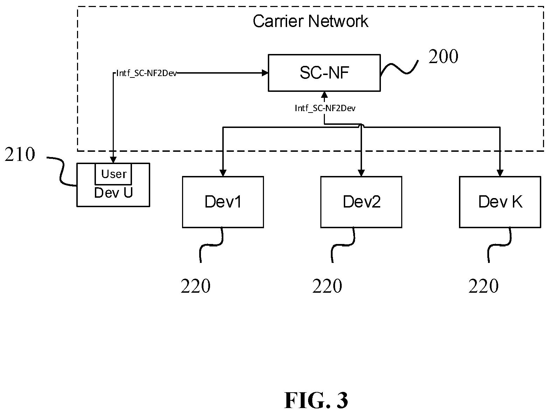

The first embodiment is that the SC-NF 200 may be implemented in an operator's network. For example, the operator may provision resource to run an SC-NF 200 instance in the operator's network. The Dev U 210 interacts with the SC-NF instance over wireless connectivity provided by a mobile network. The architecture according to this embodiment of the invention, is depicted in FIG. 3.

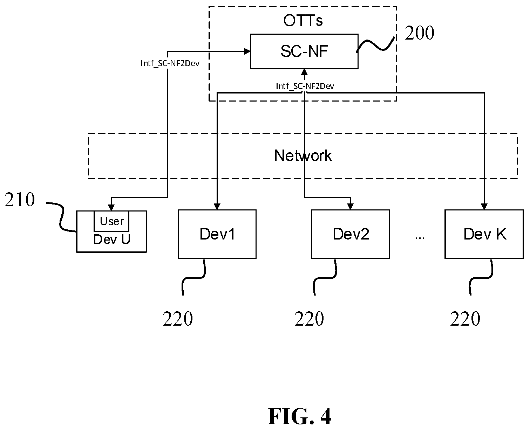

The second embodiment option is that the SC-NF 200 may be implemented as an OTT service as shown in FIG. 4. For example, a cloud data center provider may provision resource to run an SC-NF 200 as a tenant service. The cloud data center guarantees provisioned execution resource to the SC-NF 200. In addition, a cloud service provider could also provide SC-NF instantiation. The device 210 may access the SC-NF 200 through any possible network connectivity such as mobile network / WiFi connections.

Another possibility of the architecture is decentralization (not shown in figure here). The decentralized architecture may be the combined architecture of FIG. 3 and FIG. 4. For instance, a part of the SC-NF 200 functions situate in OTT (e.g. part 1), and a part of the SC-NF 200 situate in operator's network (e.g. part 2). The part 1 and part 2 coordinate with each other to provide functionalities of a logic SC-NF entity.

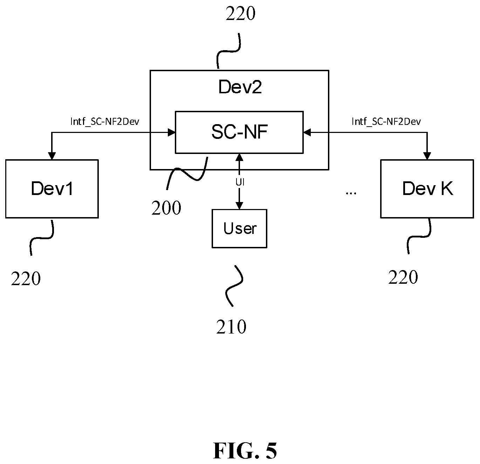

The third embodiment is that an SC-NF 200 may be implemented on a device 220 (e.g. Dev2) as shown in FIG. 5. For example, it may be just a program on a smartphone considering that the smartphone may be capable enough to provide resource for SC-NF 200. In this case, the Dev U 210 manages all resources and processes SC request.

Another example is that the main hub device or the SC-NF 200 may situate in a local network, e.g. router or WiFi box at home. The Dev U 210 may manage and control some/all devices at home to compose a service using local wireless network.

In another possible implementation, the Dev U 210 may proactively collect or have the information of other devices around, and start to design SC with the discovered resource. For example, the Dev U 210 may send broadcast or unicast message to each of the devices nearby to compose a service. All these variants will be further discussed in following embodiment sections.

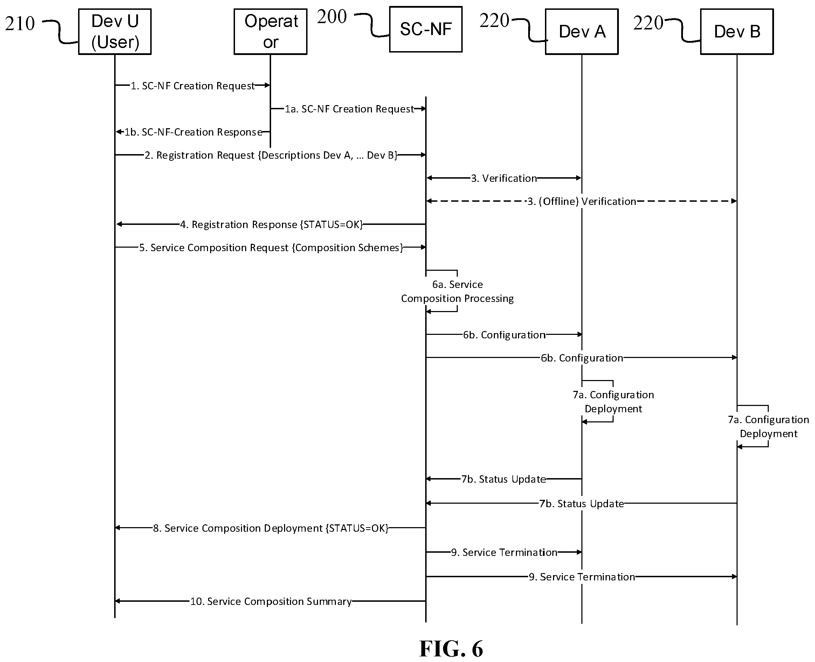

SC-NF or SCF in 3GPP network: The first embodiment is that the SC is realized by utilizing a mobile network system. In this case, devices interact with SC-NF 200, which is a special user plane network function (UP-NF) long-lived running in an operator's network domain. The detailed procedure is illustrated in FIG. 6.
1. The device 210 accessed by a user may send a request for an SC-NF instance creation. The request may be an activation switch turned on the device or it may also be a request sent manually from the device 210 e.g. making a call through the operator's network.
1a. This request is received by the network, which will allocate resource for deployment. Processing the request involves a series of operations such as authentication (e.g. Authentication Service Function (AUSF)), authorization (e.g. Policy Control Function (PCF)) and resource management. This may also involve the location service in order to have a location-based deployment to the device 210. The resource allocation will be done by interacting with the (virtualized) NF management interface (such as ETSI Network Function Virtualization (NFV) manager).
1b. The device 210 may receive a response, wherein the response may comprise access information and/or deployment result.

2. A device 220 is registered at SC-NF 200. In registration, it comprises registration information, particularly description, of the device 220. Attributes of a device description may include one or more of the attributes in Table 1 as example, or may not be limited to the fields in Table 1.

**Table 1 Device Description Attribute List**

| *Attribute* | *Remark* |
|---|---|
| DEV_ID | An identifier that is used to identify the resource (e.g. a URL link, an identifier) |
| Type | The type of the resource, could be a device, an App and/or a subscription |
| DevSpecs | The specification of a device {storage, CPU, MEM, special hardware e.g. camera, loudspeaker, sensors if any} |
| Interface | Numbers and supported protocols of available interfaces on the device if any (e.g. WiFi, Bluetooth, Cellular) |
| AppSpecs | Features and access methods provided by an App (e.g. specifications of APIs) |
| SubSpecs | The specification of a subscription of a third party service (e.g. the current tariff plan, paid features, APIs and so on) |
| Credential | A list of credentials that are used to access the device and/or the subscriptions of third party service. |

A registered device 220 may be updated by sending a new registration request with new descriptions or by some specific reconfiguration.

According to embodiment of the invention, there are generally two ways to register a device. The first way may be that a device registers for another device at SC-NF 200. For example, Dev U registers for Dev A. The second way may be that a device registers itself at SC-NF 200. For example, the Dev U 210 registers itself, which refers to a case that Dev U 210 and Dev A 220 are the same, i.e., Dev U 210 is Dev A 220.

3. The SC-NF 200 receives the registration request and there are two possibilities to verify the status (availability) of the device 220:
3a. The first case is that the device 220 is a connected device. SC-NF 200 verifies the device 220 over the connection. For the type of a hardware equipment or component, the status check could be its specifications that are provided within the registration request; for the type of an App, the status check could be its supported functionality features; for a subscription, the status check could be its tariff and/or its accessibility to the subscribed service;
3b. The second case is that the device 220 is temporarily offline. In this case, SC-NF 200 will first store the (updated) description of the device 220 and try to check with the device later. The check can be done in a periodical manner with a threshold limit to stop. If the number of trials reaches the limit, the registration of this device fails.

However, there is an exception where a device is an offline device. For example, a device 220 may only have Bluetooth, infrared and/or WiFi interface(s), so it cannot be reached by or connect to SC-NF 200. From the SC-NF's point of view, the device 220 is an offline resource. In this case, the SC-NF 200 ignores its availability check while just stores the device description. However, an offline device should also be able to participate a future SC, while the device 220 will have to make sure the availability of a non-cellular device.

4. The SC-NF 200 sends a registration response to notify the registration result. The registration response may be sent to the SC-NF client or the registered device 220, depending on the method how the device 220 was registered. A successful registration may be that a device eventually passes the verification check. A failed registration may be that the SC-NF 200 finds the attributes of the verified device not matching with the registration requests or the SC-NF 200 fails to communicate with the device.

5. An SC request is defined and sent to SC-NF 200. The service composition request defines how a set of registered resources may be utilized for a given objective. In specific, an SC may include at least one of the parameters in

Table 2 for example.

**Table 2. Service Composition Request Fields**

| *Field* | *Remark* |
|---|---|
| SC_NAME | A (readable) given name of an SC |
| DevList | A list of devices (DEV_IDs) that are included for the SC |
| SC_IDs | Existing SCs that are deployed on devices |
| Composition Workflow | A definition of logical relationship among resources specified in the DevList (e.g. inter-connection topology defining ingress and egress devices, interface protocol selection, data exchange rules, formats, security policies, service quality requirements and so on) |
| Termination Condition | The condition(s) that trigger the SC-NF to terminate the SC if the specified condition(s) are fulfilled |

An SC request may be generated by the device 210. The device 210 may provide a friendly interface to the user who may easily design an SC, e.g. having a graphic user interface and/or a command line terminal. With synchronized view of all available devices, an initial feasibility can be done for a proposed SC. Note that an SC request may also include SC-NF 200 as part of the workflow.

6. The SC request is processed by SC-NF 200. In specific, SC-NF 200 may check the requirements of the SC request and match them with the current device availability status. This may include the checklist in Table 3.

**Table 3. Resource Description Checklist**

| *Item* | *Remark* |
|---|---|
| Capacity | Hardware Specifications (e.g. on CPU, memory and storage) that are required in an SC request |
| Interface Compatibility | Compatibility of requested interfaces, protocols, parameters and so on in an SC request |
| Features | Availability of hardware components (e.g. camera, sensors, screens, etc.) and/or software features that are required for an SC request |
| Security | Requirements on security conditions |

If the checklist is fulfilled, SC-NF 200 prescribes a workflow with configurations for individual device. Otherwise, SC-NF 200 will reply to the device 210 that the SC is infeasible.

The configuration is sent to every involved device with specified configuration parameters. The configuration may at least contain the parameters in Table 4.

**Table 4. Configuration for a Service Composition**

| *Parameter* | *Definition* |
|---|---|
| SC_ID | Identifier referring a participated service composition |
| SC_NAME | The given name of an SC |
| Provisioning Configurations | A configuration providing parameters about how much resources such as CPU, memory and storage are provisioned for the SC |
| Service Feature(s) | Configurations with parameters for hardware features (e.g. ON/OFF the camera, loudspeaker, sensors) and/or /software features (e.g. ON/OFF Apps, API call parameters to access Apps etc.) |
| Ingress Device(s) | A list containing DEV_IDs referring to the devices that provide ingress data for the SC |
| Rx Interface(s) | Configurations for receiving interfaces at service, networking and physical layers (e.g. IP/MAC address, routing, forwarding, radio channel, coding, QoS, data rate) |
| Egress Device(s) | A list containing the DEV_IDs referring to the devices that are provided egress data for the SC |
| Tx Interface(s) | Configurations for transmitting interfaces at service, networking and physical layers (e.g. IP/MAC address, radio channel, coding, QoS, data rate) |
| Required Credentials | Required credentials for the device to access other peer device(s) in an SC |
| Composition Rules | Security levels about encryption (e.g. specific algorithm, key material distribution), authentication and so on |

7a. Configurations will be deployed by all involved devices and after that the SC starts to work. A summary of the deployment is collected by the SC-NF 200 and sent back to the device 210 as a deployment result.

7b. In run-time, according to the monitoring status, the devices 220 may send status update to SC-NF 200. Sometimes, the device 220 may find the service quality cannot be fulfilled, and the devices 220 may send proactively status update to the SC-NF 200.

While in some other scenarios, the SC-NF 200 may also update the quality requirements to the devices 200, for example, the radio environment is changed. If the adjustment cannot fulfill the requirement of the SC, SC-NF 200 stops the SC.

8. SC-NF 200 sends a response to the device 210 about the deployment status. Note that from Step 2 to Step 8, it can be a loop until a termination condition is triggered. A termination condition may be specified as in the SC request, or as a new request from a device 210.

9. To terminate an SC, SC-NF 200 sends a termination notification to every involved device 220.

10. SC-NF 200 sends a service summary to the requesting device 210.

SC-NF or SCF in clouds: A similar embodiment is that an SC-NF is deployed in a cloud environment. In this embodiment, the SC-NF instance runs in cloud data centers ranging from big data centers at a centralized location to micro data centers at edge of the network.

The role of a cloud provider may be the resource provider accommodating the SC-NF instance, or the provider of SC-NF logic itself. In a first case, the cloud provider is agnostic to the SC-NF instance. In a second case, the cloud provider is aware of the functionality of SC-NF instance and may provide additional assistances to the SC-NF instance. In both cases, the sovereignty of the SC-NF instance belongs to its owner who deploys it in a cloud service provider.

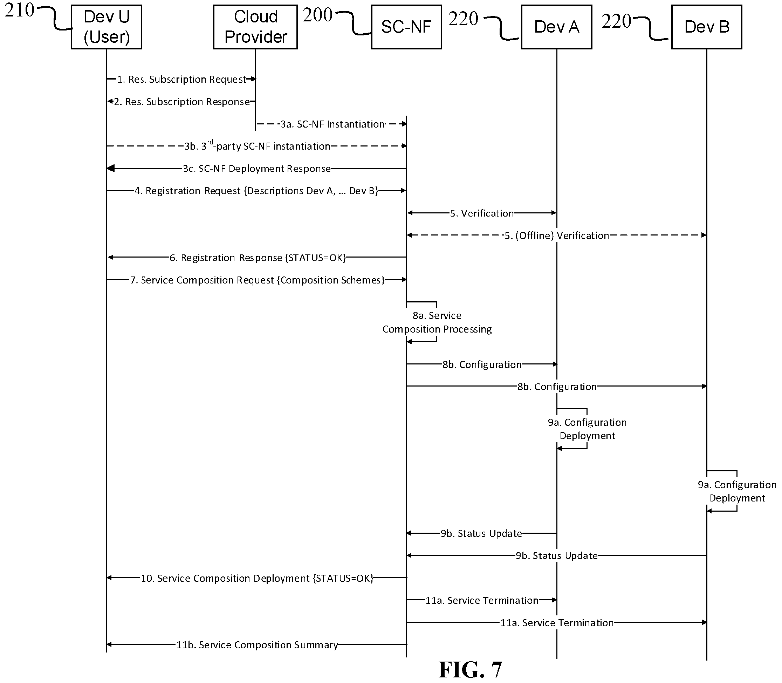

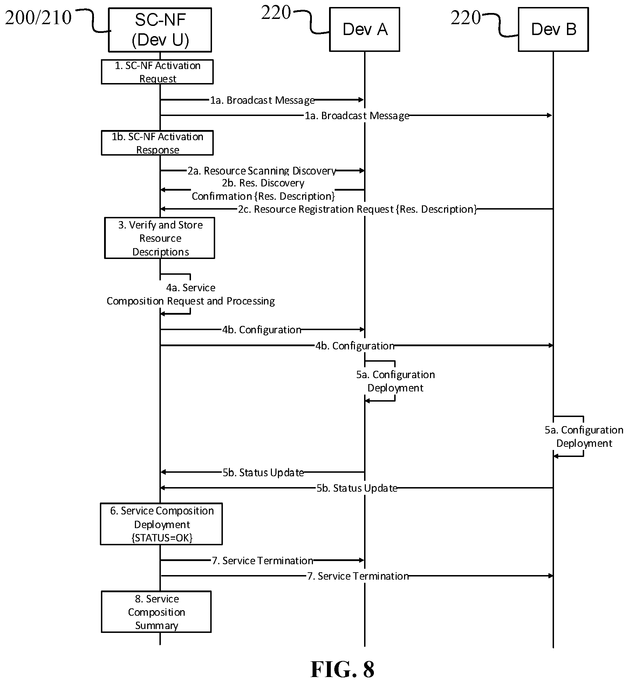

The procedure of how service composition is realized with SC-NF deployed in clouds is depicted in FIG. 7. In particular, the procedure comprises the following steps:
1. A device 210 sends a request to subscribe cloud resource from a cloud service provider, which may be done by accessing an interface provided by the cloud service provider.
2. The cloud service provider may send a response to the device whether the cloud resource subscription request succeeds.
3. There are two options where an SC-NF instance may be created with the subscribed cloud resource.
   3a. An SC-NF 200 may be directly instantiated by the cloud service provider as part of the resource provisioning;
   3b. Or an SC-NF instance may be instantiated from the source of a third party App provider.
   3c. After a successful deployment, the deployment information about the SC-NF instance 200 may be sent as a response to the device 210.
   For both ways, the placement of the SC-NF 200 may be either specified by the device 210 during cloud resource subscription or automatically scheduling by the cloud service provider in terms of some resource management policies as well as explicit requirements from the device 210 (e.g. a location-based deployment is preferred).
4. A device registration request is sent to SC-NF 200. The first way to register device 220 is that the device 210 may provide device description and send to the SC-NF 200 over an interface provided by the cloud. The interface may be just the same interface where the device 210 subscribes the cloud resource or a different one. In this case, the registered device could be either a connected device or an offline device that cannot access to the SC-NF 200. The second way to register a device 220 is that the user may directly access from a device 220 and configure the device to register at the SC-NF 200 in the cloud. The description of a device 220 may contain one or more of the information listed in Table 1.
5. After receiving the registration request, the SC-NF 200 checks the status of the device 220 with the checklist similar to Table 3.
   If the type of the device 220 is a connected device and the registration request is not sent directly from the device 220, the SC-NF 200 uses the provided information to connect to the device 220 and finish the checking list. Similarly, if the device 220 is temporarily offline, SC-NF 200 will try multiple times in order to finish the checking; if the registration request is directly sent from the device 220, the SC-NF 200 stores the device description and marks the device as registered.
   If the type of the device 220 is a disconnected device, SC-NF 200 only stores its description. Then it is the full responsibility of the device 210 which should guarantee the availability of the devices 220 in an SC.
6. SC-NF 200 sends a device registration response to the device 210 with the registration status.
7. An SC request is sent to SC-NF 200. Similar to the previous embodiment, an SC request provides the information as in Table 2. Similarly, an SC request may also include SC-NF as part of the specified workflow. Over the interface to the SC-NF 200, a comprehensive view is provided to the device 210. As a pre-stage verification, a device 210 can check the availability of registered devices when designing an SC request.
8. SC-NF 200 receives and processes the SC request. In specific,
   8a. SC-NF 200 verifies the devices 220 listed in the SC request. This check may provide a secondary verification on the availability in case any mismatch happened in the pre-stage verification.
   8b. If the checklist verification passed, SC-NF 200 prescribes and sends a workflow with configurations for individual devices 220. Otherwise, SC-NF 200 informs the device 210 that the SC is infeasible.
9. Every device 220 receives its configuration from SC-NF 200. In specific,
   9a. The configuration may optionally processed by every involved device 220, which takes the specified parameters in the configuration and deploys locally. A configuration for a device 220 contains at least one of the parameters listed in Table 4.
   9b. After the configuration is deployed, the SC starts to work. The summary of the deployment may be collected by the SC-NF 200 and sent back to the device 210 as a deployment result.
   In run-time, according to the monitoring status, the SC-NF 200 may send necessary configuration changes to one or more working devices in order to guarantee the service quality. If the adjustment cannot fulfill the requirement of the SC, SC-NF 200 may stop the service.
10. SC-NF 200 may optionally send a response to the device 210 with the SC deployment summary.
11. To terminate an SC when termination conditions are met,
   11a. SC-NF 200 sends a termination notification to every involved device 220;
   11b. SC-NF 200 sends a service summary to the device 210. SC-NF or SCF on a hub device: The third embodiment is realized in a hub device. A device may act as a main hub device to provide SC functionalities with other available devices. It should be noted that the main hub device may also participate in an SC. According to this embodiment, the procedure is described in FIG. 8.
      1. A device 210 activates SC-NF 200 on the device 210, called as main hub device.
         1a. The activated SC-NF 200 on the main hub device 210 broadcasts a message, wherein the message may include the address information for accessing the service, authentication related information and security communication information.
            The broadcast message may be done in two ways, where the first way is to broadcast over a local network (e.g. a WiFi network), and the second way is to broadcast directly over the air as a beacon signal. Every device 220 in the communication range will receive the broadcast message. In particular, the communication range in the local network scenario represents the network domain; and the communication range in the beacon signal broadcasting scenario represents the area that can be covered by the main hub device 210. The broadcasting may be periodical so that new device 220 may discover the existence of the main hub device 210.
         1b. After activation, SC-NF 200 can send a response to the device 210. This could be just a notification on the device 210 to show the status of the SC-NF 200.
      2. There may be two ways for device registration.
         2a. The first way is that the main hub device 210 actively scans and adds discovered devices 220. In specific, the main hub device 210 sends a scan discovery message to the network or the neighboring area, the scan discovery message will be received by the neighboring devices, in which device 220 can decide if it accepts the discovery.
            If a device 220 confirms the discovery, the device 220 may reply with a description message to the main hub device 210 as 2b in Fig. 8. The confirmation may be done automatically by the device 220 itself or manually on the device 220. Note that the scan discovery message may be also combined with the broadcast message in the previous step.
         2c. The second is that a device 220 may register at the main hub device 210 with the broadcast information, instead of waiting for the scanning discovery. This may be done by the device 220 or by its owner proactively. To register the device 220, the access information may be used to connect to the main hub device 210 by following the authentication rules and security policies. If necessary, a credential may be required in order to access the main hub device 210. After that, the device 220 may provide its description to the main hub device 210.
      3. Information of the description is similar to the fields in Table 1. Similarly, the main hub device 210 may still check the description provided by the devices, and the resource may be for example device 220. If description information is verified, the resource is successfully registered at the main hub device 210. Otherwise, the registration of the device fails.
      4. An SC request is planned on the main hub device 210. In the SC request, it defines how a set of registered devices should be organized in order to form a new logical service. Similarly, an SC request may include at least some of the parameters in Table 2 as well as the SC-NF 200 as part of the workflow. The SC request is processed by the SC-NF 200 on the same device. In specific,
         4a. SC-NF 200 may define a workflow configuration composed with all involved devices 220. In specific, SC-NF 200 on the main hub device follows a checklist similarly as the checklist defined in Table 3, to check the availability and capability of the devices 220;
         4b. If all devices 220 fulfill the requirements, individual configurations as in Table 4 may be prepared and sent to devices 220 respectively.
      5. Each device 220 applies the configurations prescribed by the main hub device 210 (SC-NF 200 on the main hub device 210). In specific,
         5a. The configurations are parsed by the device 220. Similarly, the configurations may also specify for example how much storage, computing and networking capabilities are required for the logical device; what the inputs or outputs will be generated; which peer (devices) the device will communicate with; or how the communication parameters the interface of the resource will use.
         5b. After applying the configurations, each device 220 may send its feedback as a summary to the main hub device 210.
         In run-time, according to the monitoring status, the devices 220 may send status update to SC-NF 200. Sometimes, the device 220 may find the service quality cannot be fulfilled, and the devices 220 may send proactively status update to the SC-NF 200.
         While in some other scenarios, the SC-NF 200 may also update the quality requirements to the devices 200, for example the radio environment is changed. In run-time, according to the monitoring status, the main hub device 210 may send necessary configuration changes to one or more working devices 220 in order to guarantee the service quality. If the adjustment cannot fulfil the SC requirement, the main hub device 210 may stop the SC.
      6. After the configurations are deployed to the devices 220, the composed service starts to work. On the main hub device 210, relevant logs based on the summaries from individual device 220 will be recorded for future references.
      7. If a termination condition is satisfied, the SC finishes. The termination condition may be a timer according to the duration parameter, an expected SC outcome and/or an order directly from the owner. A statistic report may be generated and/or stored.

It can be seen that, the SC-NF 200 may be implemented at different layers on the main hub device 210. Firstly, this may be an App developed directly by a vendor who supports service composition for its own products (i.e. devices/Apps). This App may also support products from other companies if a standardized interface/protocol is used. Secondly, it may be a third party App, where different software companies may provide similar kind of Apps but featured with special designs that differentiate themselves to the other. Thirdly, this may be a kernel level functionality in the operation system (OS), which requires main OS providers to support service composition functionalities.

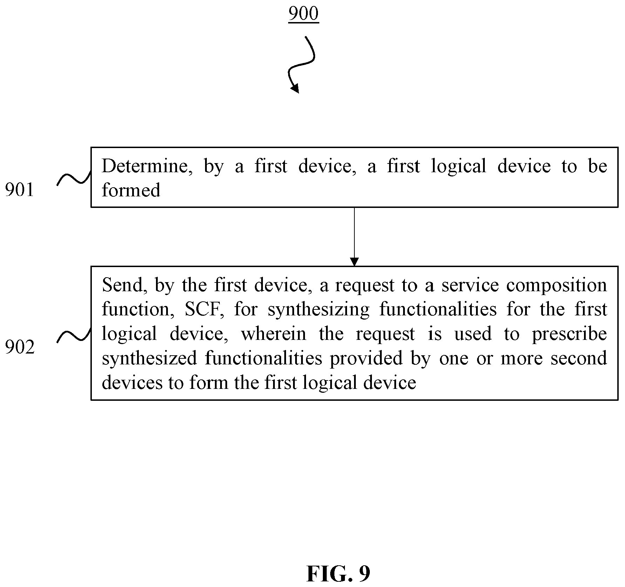

FIG. 9 shows a method 900 according to an embodiment of the invention, particularly for service composition in wireless network. In a particular embodiment of the invention, the method 900 may be performed by a first device 210. The method 900 comprises: a step 901 of determining a first logical device to be formed; and a step 902 of sending a request to an SCF 200, for synthesizing functionalities for the first logical device, wherein the request is used to request the SCF 200 to prescribe synthesized functionalities provided by one or more second devices 220 to form the first logical device, and the request comprises configurations for the one or more second devices 220.

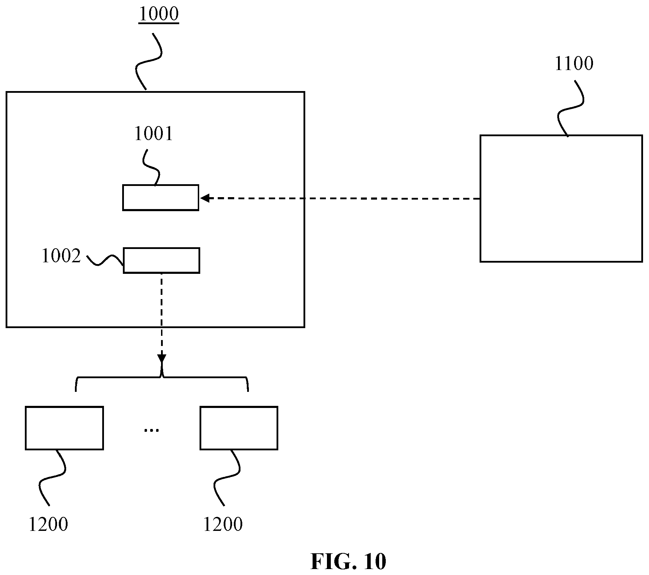

FIG. 10 shows a network entity 1000 adapted for composing a service in wireless network according to an embodiment of the invention. The network entity 1000 may comprise processing circuitry (not shown) configured to perform, conduct or initiate the various operations of the network entity 1000 described herein. The processing circuitry may comprise hardware and/or software. The hardware may comprise analog circuitry or digital circuitry, or both analog and digital circuitry. The digital circuitry may comprise components such as application-specific integrated circuits (ASICs), field-programmable arrays (FPGAs), digital signal processors (DSPs), or multi-purpose processors. The network entity 1000 may further comprise memory circuitry, which stores one or more instruction(s) that can be executed by the processor or by the processing circuitry, in particular under control of the software. For instance, the memory circuitry may comprise a non-transitory storage medium storing executable software code which, when executed by the processor or the processing circuitry, causes the various operations of the network entity 1000 to be performed. In one embodiment, the processing circuitry comprises one or more processors and a non-transitory memory connected to the one or more processors. The non-transitory memory may carry executable program code which, when executed by the one or more processors, causes the network entity 1000 to perform, conduct or initiate the operations or methods described herein.

The network entity 1000 may further comprise a communication interface, e.g. transceiver which is used to receive/transmit message from/to other devices, e.g. device 210, or 220 etc.

In particular, the communication interface of the network entity 1000 may be configured to receive a request 1001 from a first device 1100, wherein the request 1001 may be used to prescribe synthesized functionalities provided by one or more second devices 1200 to form a first logical device. Further, the processor of the network entity 1000 may be configured to provide configuration information 1002 to the one or more second devices 1200 based on the request 1001, wherein the configuration information 1002 indicates a set of actions and/or parameters to form the first logical device. According to embodiments of this invention, an SCF may be implemented on the network entity 1000.

The network entity 100 may be able to perform or executed the procedures described in previous embodiments to act as an SCF 200 using for example the processor. It should be noted that, the network entity 1000 according to embodiments of this invention, may be a user-controlled entity. It is different from a conventional network entity, which may be controlled by a network operator.

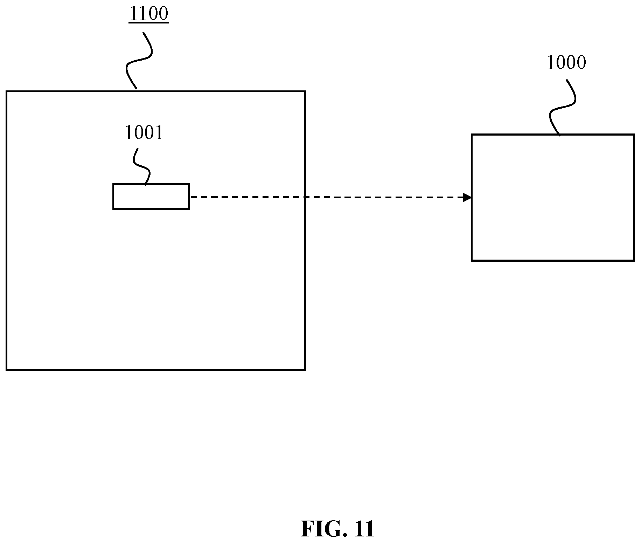

FIG. 11 shows a user entity 1100 adapted for service composition in wireless network according to an embodiment of the invention. The user entity 1100 may be the devices 210 and/or 220 in the previous embodiments. The user entity 1100 may be configured to determine a first logical device to be formed. Further, the user entity 1100 may be configured to send a request 1001 to an SCF 1000, for synthesizing functionalities for the first logical device. In particular, the request 1001 may be used to request the SCF 1000 to prescribe synthesized functionalities provided by one or more second devices 1200 to form the first logical device, and the request 1001 comprises configurations for the one or more second devices 1200. In a specific embodiment, the network entity 1000 shown in FIG. 11 may be the network entity 1000 shown in FIG. 10. According to embodiments of this invention, the user entity 1100 may be a user device controlled and managed by a user.

To summarize, this disclosure proposes a solution for service composition with devices. In particular, the disclosure involves three parts: 1) a set of devices, which can be networked and/or offline and managed by a user/device, 2) a newly proposed NF (i.e., SC-NF that provides the functionality of service composition) and 3) interfaces between the device (user) and the SC-NF. A main part of this disclosure is new interfaces and signaling parameters exchanged over the new interfaces.

In particular, the new interfaces may include:
An interface between the device and the SC-NF (e.g., Intf_SC-NF2Dev)

The first main function of this interface is that a user of a device may use this interface to manage its devices at the SC-NF. In specific, for device management, a user may use this interface for device registration, update and de-registration as shown in the exemplary embodiments. Signaling parameters may include:
- Detailed hardware profiles/specifications including compute, storage, networking capabilities of any nature (local, remote, virtual, physical, devices, services, etc);
- Featured hardware components (e.g. camera, sensors, and so on)
- Available software element(s) (installed/compatible Apps), discovery modes and so on; or,
- The corresponding credentials or access modalities and any combination of them.

All these parameters associate to individual devices that are identified by device identifiers (i.e. DEV_IDs).

The second main function of this interface is that a device may use this interface to create a SC request with SC-NF. In specific, signaling parameters may include:
- A list of resources (e.g. DEV_IDs) where the listed services are presented as service access points with descriptions, e.g. URLs or URIs, of the usable services, along with the credentials.
- A composition workflow to specify how the listed devices and/or the SC-NF should collaborate with each other where status of existing availability/capacity of the listed device are checked; (communication) protocols, parameters, interfaces are provisioned; policy compliance is verified.

The composition workflow defines a set of triggers (events, conditions) about the state of specific devices and/or environment and (a set of) actions that will be performed when the events happen.

The third main function of this interface is to deploy a composed service to the registered devices. In specific, signaling parameters include:
- The composition workflow configuration corresponding to DEV_ID and an SC_ID that is instructed on every involved device.

The status may be proactively reported from or inquired at the device. The status may indicate the run-time data of the device such as incurred consumptions (e.g. physical resource / tariff resource), connectivity quality (e.g. packet lost, bandwidth and latency) and so on.

It can be seen that, the embodiments of this disclosed invention bring the following key benefits.

To the users/devices, it provides a unified view of the devices for the users/devices, which are scattered in existing paradigm scheme where the service providers control and manage the devices separately. Within existing schemes, it is difficult to have an overall view as brought by the SC-NF.

It further provides new types of services that can be customized by individual device. Within the provider-centric paradigm, a new service is created by the service provider rather than the user, this largely limits the variety of the service market. A user/device is restricted by service providers who decide what kinds of services will be available.

More importantly, it provides a self-sovereign domain where a user/device may fully control how the devices work together. This largely mitigates the privacy branching issues, data ownership issues and so on. The key reason is that the propose SC-NF becomes a service hub that is only accessible to its actual owner. In this case, a user or user device, e.g. user entity 1100 may easily design necessary logics such as encryption logic, cryptographical hash logic and so on to protect their own data; even personalized cloud storage utilization can be added when sending data to multiple cloud drives. However, in existing provider-centric paradigm, there is no such a self-sovereign domain for a user. All services are directly provided at providers' domain, otherwise a user/device cannot use their services.

This disclosure is also meaningful to service providers. First of all, it enables the possibility that a user/device may customize new service. This brings benefits to the service providers in the sense of service variety. It not only implies new service capability, but also means new business opportunities. Users may be attracted by the new service capability, which gives them more controllability. User may be also willing to pay for the new service capability.

An additional benefit is that this embodiments of the present invention disclosure potentially improves general data protection regulation (GDPR) compliance for service providers. The reason is that an SC-NF acts like a middlebox, which is owned and controlled by the user/device, to store personal data in a secure manner. This eliminates the current way that a device directly uploads its personal data to the domain of a service provider (e.g. a cloud storage). When the data is needed by a third party, it has to get an approval by the device in order receive the data from the SC-NF. Such a model improves accountability of the whole system, which is again GDPR requirement. In principle, with an SC-NF, a service provider does not have to store personal data from all its devices.

The present disclosure has been described in conjunction with various embodiments as examples as well as implementations. However, other variations can be understood and effected by those persons skilled in the art and practicing the claimed invention, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

Furthermore, any method according to embodiments of the invention may be implemented in a computer program, having code means, which when run by processing means causes the processing means to execute the steps of the method. The computer program is included in a computer readable medium of a computer program product. The computer readable medium may comprise essentially any memory, such as a ROM (Read-Only Memory), a PROM (Programmable Read-Only Memory), an EPROM (Erasable PROM), a Flash memory, an EEPROM (Electrically Erasable PROM), or a hard disk drive.

Moreover, it is realized by the skilled person that embodiments of the network entity 1000 or the user entity 1100 comprises the necessary communication capabilities in the form of e.g., functions, means, units, elements, etc., for performing the solution. Examples of other such means, units, elements and functions are: processors, memory, buffers, control logic, encoders, decoders, rate matchers, de-rate matchers, mapping units, multipliers, decision units, selecting units, switches, interleavers, de-interleavers, modulators, demodulators, inputs, outputs, antennas, amplifiers, receiver units, transmitter units, DSPs, trellis-coded modulation (TCM) encoder, TCM decoder, power supply units, power feeders, communication interfaces, communication protocols, etc. which are suitably arranged together for performing the solution.

Especially, the processor(s) of the network entity 1000 or the user entity 1100 may comprise, e.g., one or more instances of a Central Processing Unit (CPU), a processing unit, a processing circuit, a processor, an Application Specific Integrated Circuit (ASIC), a microprocessor, or other processing logic that may interpret and execute instructions. The expression "processor" may thus represent a processing circuitry comprising a plurality of processing circuits, such as, e.g., any, some or all of the ones mentioned above. The processing circuitry may further perform data processing functions for inputting, outputting, and processing of data comprising data buffering and device control functions, such as call processing control, user interface control, or the like.

## Claims

1. A method (100) for composing a service in wireless network, the method comprising:
receiving (101), by a service composition function, SCF (200), a request from a first device (210), wherein the request is used to prescribe synthesized functionalities provided by one or more second devices (220) to form a first logical device;
generating, by the SCF, configuration information based on the request from a first device, wherein the configuration information specifies a set of actions and/or parameters for forming the first logical device, wherein the configuration information is decomposed into detailed configurations for each of the one or more second devices with logical relationships, interface parameters, and collaboration policies; and
providing (102), by the SCF (200), the configuration information to each of the one or more second devices (220) to form the first logical device.

2. The method (100) according to claim 1, wherein the request comprises one or more of the following: a name of the first logical device; the synthesized functionalities provided by the one or more second devices (220); a condition to trigger a termination of the prescribed synthesized functionalities.

3. The method (100) according to claim 1 or 2, further comprises:
receiving, by the SCF (200), a registration request from the first device (210) and/or the one or more second devices (220), to register the one or more second devices (220) at the SCF (200), wherein the registration request comprises a registration information of the one or more second devices (220).

4. The method (100) according to claim 3, wherein the registration information comprises at least one of: an identifier, a type, a specification, one or more interfaces, one or more applications of the one or more second devices (220), one or more specifications of subscriptions of third party services on the one or more second devices (220), a list of credentials to access the one or more second devices (220), and a list of credentials to access the subscriptions of third party services.

5. The method (100) according to claim 3 or 4, further comprises:
sending, by the SCF (200), one or more verifications to the one or more second devices (220) to verify for the registration request.

6. The method (100) according to claim 5, wherein the one or more verifications are further used to check whether a requirement of the prescribed synthesized functionalities can be fulfilled by the one or more second devices (220) according to the registration information for the one or more second devices (220).

7. The method (100) according to one of the claims 3 to 6, comprising:
determining, by the SCF (200), based on the registration request and/or a result of the one or more verifications, whether the registration is successful.

8. The method (100) according to claim 7, comprising:
sending, by the SCF (200), a registration response to notify the first device (210) that sends the registration request, whether the registration is successful.

9. The method (100) according to one of the claims 1 to 8, wherein the set of actions and/or parameters comprises one or more of the following: one or more logical relationships between the one or more second devices (220), an inter-connection topology defining one or more ingress and/or egress devices of the one or more second devices (220), an interface protocol selection, one or more data exchange rules, one or more data formats, one or more security policies, one or more service quality requirements.

10. The method (100) according to one of the claims 1 to 9, wherein the configuration information comprises one or more of the following: a name of the first logical device; a list of one or more second devices that provide egress data for the prescribed synthesized functionalities; configurations for one or more transmitting interfaces; a list of one or more second devices (220) that consume ingress data for the prescribed synthesized functionalities; configurations for one or more receiving interfaces; required credentials for a second devices (220) to access another second device (220).

11. The method (100) according to one of the claims 1 to 10, comprising:
receiving, by the SCF (200), a feedback from the one or more second devices, the feedback indicating that the configuration information has been deployed on the one or more second devices.

12. The method (100) according to one of the claims 2 to 11, comprising:
terminating, by the SCF (200), the prescribed synthesized functionalities of the first logical device, if the condition to trigger the termination is met; or,
notifying, by the SCF (200), the one or more second devices to remove the configuration information; or
sending, by the SCF (200), a summary to the first device (210).

13. A network entity (1000) for composing a service in wireless network, comprising:
a processor, and
a memory coupled to the processor and having processor-executable instructions stored thereon, which when executed by the processor, cause the processor to perform the method of claims 1 to 12.

## Patentansprüche

1. Verfahren (100) zum Zusammensetzen eines Dienstes in einem drahtlosen Netzwerk, wobei das Verfahren Folgendes umfasst:
Empfangen (101), durch eine Dienstzusammensetzungsfunktion, SCF (200), einer Anfrage von einer ersten Vorrichtung (210), wobei die Anfrage dazu verwendet wird, synthetisierte Funktionalitäten, die durch eine oder mehrere zweite Vorrichtungen (220) bereitgestellt werden, vorzuschreiben, um eine erste logische Vorrichtung zu bilden;
Erzeugen, durch die SCF, von Konfigurationsinformationen basierend auf der Anfrage von einer ersten Vorrichtung, wobei die Konfigurationsinformationen einen Satz von Aktionen und/oder Parametern zum Bilden der ersten logischen Vorrichtung angeben, wobei die Konfigurationsinformationen in detaillierte Konfigurationen für jede der einen oder der mehreren zweiten Vorrichtungen mit logischen Beziehungen, Schnittstellenparametern und Kollaborationsrichtlinien zerlegt werden; und
Bereitstellen (102), durch die SCF (200), der Konfigurationsinformationen an jede der einen oder der mehreren zweiten Vorrichtungen (220), um die erste logische Vorrichtung zu bilden.

2. Verfahren (100) nach Anspruch 1, wobei die Anfrage eines oder mehrere der Folgenden umfasst: einen Namen der ersten logischen Vorrichtung; die synthetisierten Funktionalitäten, die durch die eine oder die mehreren zweiten Vorrichtungen (220) bereitgestellt werden; eine Bedingung zum Auslösen einer Beendigung der vorgeschriebenen synthetisierten Funktionalitäten.

3. Verfahren (100) nach Anspruch 1 oder 2, ferner umfassend:
Empfangen, durch die SCF (200), einer Registrierungsanfrage von der ersten Vorrichtung (210) und/oder der einen oder den mehreren zweiten Vorrichtung (220), um die eine oder die mehreren zweiten Vorrichtungen (220) an der SCF (200) zu registrieren, wobei die Registrierungsanfrage Registrierungsinformationen der einen oder der mehreren zweiten Vorrichtungen (220) umfasst.

4. Verfahren (100) nach Anspruch 3, wobei die Registrierungsinformationen mindestens eines der Folgenden umfassen: eine Kennung, einen Typ, eine Spezifikation, eine oder mehrere Schnittstellen, eine oder mehrere Anwendungen der einen oder der mehreren zweiten Vorrichtungen (220), eine oder mehrere Spezifikationen von Abonnements von Drittanbieterdiensten auf der einen oder den mehreren zweiten Vorrichtungen (220), eine Liste von Anmeldeinformationen, um auf die eine oder die mehreren zweiten Vorrichtungen (220) zuzugreifen, und eine Liste von Anmeldeinformationen, um auf die Abonnements von Drittanbieterdiensten zuzugreifen.

5. Verfahren (100) nach Anspruch 3 oder 4, ferner umfassend:
Senden, durch die SCF (200), einer oder mehrerer Verifizierungen an die eine oder die mehreren zweiten Vorrichtungen (220), um die Registrierungsanfrage zu verifizieren.

6. Verfahren (100) nach Anspruch 5, wobei die eine oder die mehreren Verifizierungen ferner dazu verwendet werden, zu prüfen, ob eine Anforderung der vorgeschriebenen synthetisierten Funktionalitäten durch die eine oder die mehreren zweiten Vorrichtungen (220) gemäß den Registrierungsinformationen für die eine oder die mehreren zweiten Vorrichtungen (220) erfüllt werden kann.

7. Verfahren (100) nach einem der Ansprüche 3 bis 6, umfassend:
Bestimmen, durch die SCF (200), basierend auf der Registrierungsanfrage und/oder einem Ergebnis der einen oder der mehreren Verifizierungen, ob die Registrierung erfolgreich ist.

8. Verfahren (100) nach Anspruch 7, umfassend:
Senden, durch die SCF (200), einer Registrierungsantwort, um die erste Vorrichtung (210), welche die Registrierungsanfrage sendet, zu benachrichtigen, ob die Registrierung erfolgreich ist.

9. Verfahren (100) nach einem der Ansprüche 1 bis 8, wobei der Satz von Aktionen und/oder Parametern eines oder mehrere der Folgenden umfasst: eine oder mehrere logische Beziehungen zwischen der einen oder den mehreren zweiten Vorrichtungen (220), eine Zusammenschaltungstopologie, die eine oder mehrere Eingangs- und/oder Ausgangsvorrichtungen der einen oder der mehreren zweiten Vorrichtungen (220) definiert, eine Schnittstellenprotokollauswahl, eine oder mehrere Datenaustauschregeln, ein oder mehrere Datenformate, eine oder mehrere Sicherheitsrichtlinien, eine oder mehrere Dienstqualitätsanforderungen.

10. Verfahren (100) nach einem der Ansprüche 1 bis 9, wobei die Konfigurationsinformationen eines oder mehrere der Folgenden umfassen: einen Namen der ersten logischen Vorrichtung; eine Liste einer oder mehrerer zweiter Vorrichtungen, die Ausgangsdaten für die vorgeschriebenen synthetisierten Funktionalitäten bereitstellen; Konfigurationen für eine oder mehrere Übertragungsschnittstellen; eine Liste einer oder mehrerer zweiter Vorrichtungen (220), die Eingangsdaten für die vorgeschriebenen synthetisierten Funktionalitäten verbrauchen; Konfigurationen für eine oder mehrere Empfangsschnittstellen; erforderliche Anmeldeinformationen für eine zweite Vorrichtung (220), um auf eine andere zweite Vorrichtung (220) zuzugreifen.

11. Verfahren (100) nach einem der Ansprüche 1 bis 10, umfassend:
Empfangen, durch die SCF (200), einer Rückmeldung von der einen oder den mehreren zweiten Vorrichtungen, wobei die Rückmeldung anzeigt, dass die Konfigurationsinformationen auf der einen oder den mehreren zweiten Vorrichtungen eingesetzt wurden.

12. Verfahren (100) nach einem der Ansprüche 2 bis 11, umfassend:
Beenden, durch die SCF (200), der vorgeschriebenen synthetisierten Funktionalitäten der ersten logischen Vorrichtung, wenn die Bedingung zum Auslösen der Beendigung erfüllt ist; oder
Benachrichtigen, durch die SCF (200), der einen oder der mehreren zweiten Vorrichtungen, die Konfigurationsinformationen zu entfernen; oder
Senden, durch die SCF (200), einer Zusammenfassung an die erste Vorrichtung (210).

13. Netzwerkeinheit (1000) zum Zusammensetzen eines Dienstes in einem drahtlosen Netzwerk, umfassend:
einen Prozessor; und
einen Speicher, der mit dem Prozessor gekoppelt ist und auf dem durch einen Prozessor ausführbare Anweisungen gespeichert sind, die, wenn sie durch den Prozessor ausgeführt werden, den Prozessor dazu veranlassen, das Verfahren nach einem der Ansprüche 1 bis 12 durchzuführen.

## Revendications

1. Procédé (100) de composition d'un service dans un réseau sans fil, le procédé comprenant :
la réception (101), par une fonction de composition de service, SCF (200), d'une demande provenant d'un premier dispositif (210), dans lequel la demande est utilisée pour prescrire des fonctionnalités synthétisées fournies par un ou plusieurs seconds dispositifs (220) pour former un premier dispositif logique ;
la génération, par la SCF, d'informations de configuration sur la base de la demande provenant d'un premier dispositif, dans lequel les informations de configuration spécifient un ensemble d'actions et/ou de paramètres pour former le premier dispositif logique, dans lequel les informations de configuration sont décomposées en configurations détaillées pour chacun des un ou plusieurs seconds dispositifs avec des relations logiques, des paramètres d'interface, et des politiques de collaboration ; et
la fourniture (102), par la SCF (200), des informations de configuration à chacun des un ou plusieurs seconds dispositifs (220) pour former le premier dispositif logique.

2. Procédé (100) selon la revendication 1, dans lequel la demande comprend un ou plusieurs des éléments suivants : un nom du premier dispositif logique ; les fonctionnalités synthétisées fournies par les un ou plusieurs seconds dispositifs (220) ; une condition pour déclencher une terminaison des fonctionnalités synthétisées prescrites.

3. Procédé (100) selon la revendication 1 ou 2, comprenant également :
la réception, par la SCF (200), d'une demande d'enregistrement provenant du premier dispositif (210) et/ou des un ou plusieurs seconds dispositifs (220), pour enregistrer les un ou plusieurs seconds dispositifs (220) au niveau de la SCF (200), dans lequel la demande d'enregistrement comprend une information d'enregistrement des un ou plusieurs seconds dispositifs (220).

4. Procédé (100) selon la revendication 3, dans lequel les informations d'enregistrement comprennent au moins l'un des éléments suivants : un identifiant, un type, une spécification, une ou plusieurs interfaces, une ou plusieurs applications des un ou plusieurs seconds dispositifs (220), une ou plusieurs spécifications d'abonnements à des services tiers sur les un ou plusieurs seconds dispositifs (220), une liste d'informations d'identification pour accéder aux un ou plusieurs seconds dispositifs (220), et une liste d'informations d'identification pour accéder aux abonnements à des services tiers.

5. Procédé (100) selon la revendication 3 ou 4, comprenant également :
l'envoi, par la SCF (200), d'une ou plusieurs vérifications aux un ou plusieurs seconds dispositifs (220) pour vérifier la demande d'enregistrement.

6. Procédé (100) selon la revendication 5, dans lequel les une ou plusieurs vérifications sont également utilisées pour vérifier si une exigence des fonctionnalités synthétisées prescrites peut être satisfaite par les un ou plusieurs seconds dispositifs (220) selon les informations d'enregistrement pour les un ou plusieurs seconds dispositifs (220).

7. Procédé (100) selon l'une quelconque des revendications 3 à 6, comprenant :
le fait de déterminer, par la SCF (200), sur la base de la demande d'enregistrement et/ou d'un résultat des une ou plusieurs vérifications, si l'enregistrement est réussi.

8. Procédé (100) selon la revendication 7, comprenant :
l'envoi, par la SCF (200), d'une réponse d'enregistrement pour notifier au premier dispositif (210) qui envoie la demande d'enregistrement, si l'enregistrement est réussi.

9. Procédé (100) selon l'une des revendications 1 à 8, dans lequel l'ensemble d'actions et/ou de paramètres comprend un ou plusieurs des éléments suivants : une ou plusieurs relations logiques entre les un ou plusieurs seconds dispositifs (220), une topologie d'interconnexion définissant un ou plusieurs dispositifs d'entrée et/ou de sortie des un ou plusieurs seconds dispositifs (220), une sélection de protocole d'interface, une ou plusieurs règles d'échange de données, un ou plusieurs formats de données, une ou plusieurs politiques de sécurité, une ou plusieurs exigences de qualité de service.

10. Procédé (100) selon l'une des revendications 1 à 9, dans lequel les informations de configuration comprennent un ou plusieurs des éléments suivants : un nom du premier dispositif logique ; une liste d'un ou plusieurs seconds dispositifs qui fournissent des données de sortie pour les fonctionnalités synthétisées prescrites ; des configurations pour une ou plusieurs interfaces de transmission ; une liste d'un ou plusieurs seconds dispositifs (220) qui consomment des données d'entrée pour les fonctionnalités synthétisées prescrites ; des configurations pour une ou plusieurs interfaces de réception ; des informations d'identification requises pour qu'un second dispositif (220) puisse accéder à un autre second dispositif (220).

11. Procédé (100) selon l'une quelconque des revendications 1 à 10, comprenant :
la réception, par la SCF (200), d'un retour d'information provenant des un ou plusieurs seconds dispositifs, le retour d'information indiquant que les informations de configuration ont été déployées sur les un ou plusieurs seconds dispositifs.

12. Procédé (100) selon l'une quelconque des revendications 2 à 11, comprenant :
la terminaison, par la SCF (200), des fonctionnalités synthétisées prescrites du premier dispositif logique, si la condition de déclenchement de la terminaison est remplie ; ou,
la notification, par la SCF (200), aux un ou plusieurs seconds dispositifs de supprimer les informations de configuration ; ou
l'envoi, par la SCF (200), d'un résumé au premier dispositif (210).

13. Entité de réseau (1000) de composition d'un service dans un réseau sans fil, comprenant :
un processeur, et
une mémoire couplée au processeur et contenant des instructions exécutables par le processeur qui, lorsqu'elles sont exécutées par le processeur, amènent le processeur à réaliser le procédé selon les revendications 1 à 12.
